# EUROPEAN PATENT SPECIFICATION

(11) **EP 3 663 622 B1**
(45) Date of publication and mention of the grant of the patent: **08.02.2023**
(21) Application number: 18306647.1
(22) Date of filing: 07.12.2018
(51) Int. Cl.: F16L 11/22

(54) **UMBILICAL WITH SEMICONDUCTIVE OUTER SHEATH**
NABELSCHNUR MIT HALBLEITENDER AUSSENHÜLLE
CORDON OMBILICAL COMPORTANT UNE GAINE EXTÉRIEURE SEMI-CONDUCTRICE

(43) Date of publication of application: 10.06.2020
(73) Proprietor: Nexans, 92400 Courbevoie (FR)
(72) Inventor: HATLO, Marius, 1676 Krakeroy (NO); OPSTAD, Ketil, 1712 Gralum (NO)
(74) Representative: Ipsilon

(56) References cited:
- WO-A1-2008/075965
- WO-A2-2012/142098
- GB-A- 2 255 104

## Description

The present application is related to steel tubes or pipes, in particular to umbilicals used in a subsea environment.

Umbilicals are commonly used in subsea applications where they are used to connect a floating structure with subsea equipment arranged on the seabed, often in connection with a hydrocarbon well. An umbilical typically comprises an outer steel tube in which is arranged a variety of cables and tubes or pipes, for example electric cables for transfer of electric power to the subsea equipment, signal cables for transfer of control signals to and from the subsea equipment, steel tubes or pipes for transport of various fluids, such as hydraulic fluid for control of for example valves on the subsea equipment or different types of chemicals to be injected into the well stream etc. An umbilical that houses high voltage power cores is sometimes referred to as a "power umbilical". The outer steel tube of an umbilical often is covered by a layer of insulating material to insulate the steel tube from the seawater. Such umbilicals are disclosed in WO2008/075965.

Often umbilicals need to be routed near or deployed in the vicinity of a system known as a "Direct Electrical Heating" system, or DEH. A DEH system is a known method for avoiding the formation of hydrate or wax build-up in a hydrocarbon transport pipeline. Such build-up can lead to plugs forming in the pipeline and are thus to be avoided. A DEH system uses a high voltage power cable to apply a voltage to the transport pipeline itself, in effect causing the pipeline itself to function as a resistive heating element that warms the hydrocarbon fluid and prevents hydrate or wax build-up. One end of the pipeline is connected to a power cable, and a so-called "piggyback" cable is connected to the outside of the pipeline along its length and connected to a far end of the pipeline to form an electrical circuit in which current flows through the pipeline.

If an umbilical or power umbilical containing steel tubes is routed close to or crosses a pipeline equipped with a Direct Electrical Heating system, electromagnetic interference will cause a voltage to build-up between the steel tubes and the surrounding seawater, across the insulting outer sheath that is commonly used for umbilicals and power umbilicals. If a steel tube with an induced voltage gets exposed to the surrounding seawater in a confined area, for example due to a rupture in the insulating outer sheath on the umbilical, AC corrosion may be initiated and ultimately cause tube leakage. Such leakage may cause serious environmental and economic consequences and must be avoided.

The current solution to this problem is to layout the umbilical on the seabed at a safe distance from a DEH system. This puts stringent requirements on the field layout for subsea architecture with DEH, often significantly increasing the cost.

According to Cigré guideline 95 "Guide on the influence of high voltage AC power systems on metallic pipelines", all pipelines located within 200√ρ distance to a high voltage AC power system runs a risk of AC-corrosion (where ρ is the seawater resistivity in Ωm). Although this guideline is for pipelines near overhead lines, the same principle holds for super duplex steel tubes near DEH systems. For seawater this means all metallic elements within 110 m from the DEH system should be considered with respect to AC-corrosion risk. Since the seabed typically has a higher resistivity, it may actually be as high as 150 m, meaning that an umbilical should ideally be routed such that it is further than 150 m from the DEH system.

### Summary of the invention

The present invention has one of its aims to provide a solution to the above described problem with the state of the art, or at least to provide an alternative solution to the problem.

The invention is a method for arranging an umbilical on the seafloor according to claim 1.

The invention is further described in the appended claims.

### Brief description of the drawings

Fig 1 is a cross sectional view of a first example of an umbilical not forming part of the invention.
Fig 2 is a cross sectional view of a second example of an umbilical not forming part of the invention.
Fig 3 illustrates an umbilical crossing a DEH pipeline.
Fig 4 is a graph comparing voltage of a prior art umbilical with an umbilical arranged according to a method according to the invention, when arranged as in Fig 3.
Fig 5 illustrates an umbilical arranged parallel to a DEH pipeline at a distance of 10m.
Fig 6 is a graph comparing voltage of a prior art umbilical with an umbilical arranged according to a method according to the invention, when arranged as in Fig 5.

### Detailed description of the invention

According to one example not forming part of the invention, an umbilical/power umbilical 10 is provided, comprising a steel umbilical tube 12 covered by an outer sheath 14 made of a semiconductive material, for example semiconductive polyethylene.

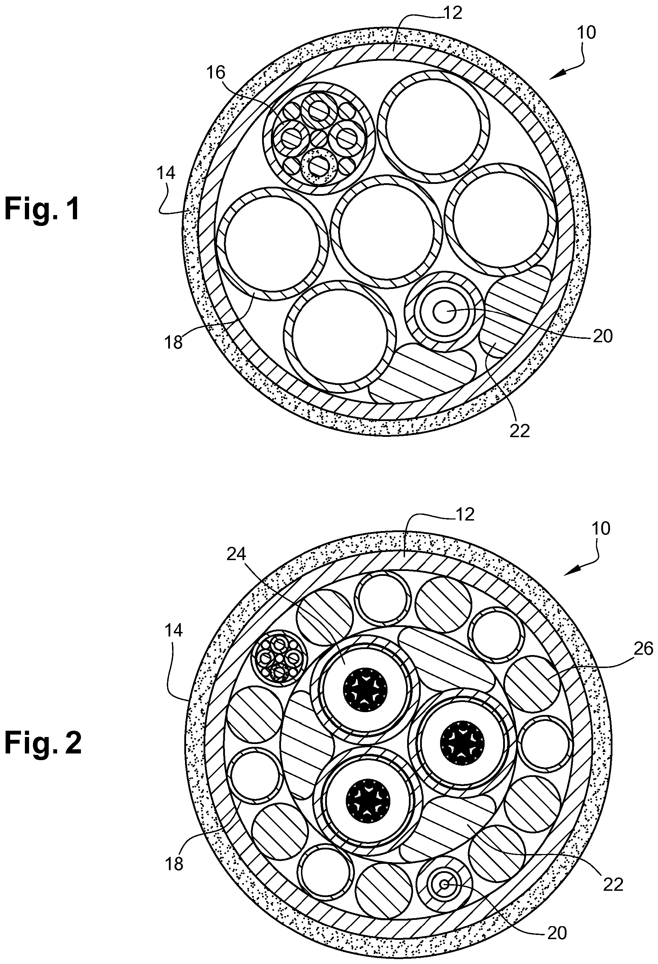

In one example, as shown in fig 1, umbilical 10 may comprise the following elements arranged inside umbilical tube 12:
- Electrical cables 16
- Steel hydraulic tubes 18
- Fiber optic cables 20
- Filler elements 22, often made of a plastic material for filling the interstices of the umbilical tube 12 between internal elements.

As can be seen in fig. 1 the various internal elements of the umbilical 10 are in contact with adjacent elements, with a plurality of steel tubes in contact with the inner surface of umbilical tube 12.

In another example not forming part of the invention, as shown in fig. 2, the umbilical 10 is a power umbilical. In this example, the umbilical 10 comprises the following elements arranged inside umbilical tube 12:
- Electrical cables 16
- Hydraulic tubes 18
- Fiber optic cables 20
- Filler elements 22
- Power cables 24, for example up to 36 kV
- PE bolt elements 26.

In both examples a layer of bundle tape 28 may be arranged between the outer sheath 14 and the umbilical tube 12.

The umbilical according to the examples facilitates, and the present invention thus provides for the laying of an umbilical on the seabed in the vicinity of a DEH system since voltage build-up may be reduced to a level where AC corrosion does not occur. This gives much more flexibility in the field layout near DEH systems, and eliminates the risk of AC corrosion.

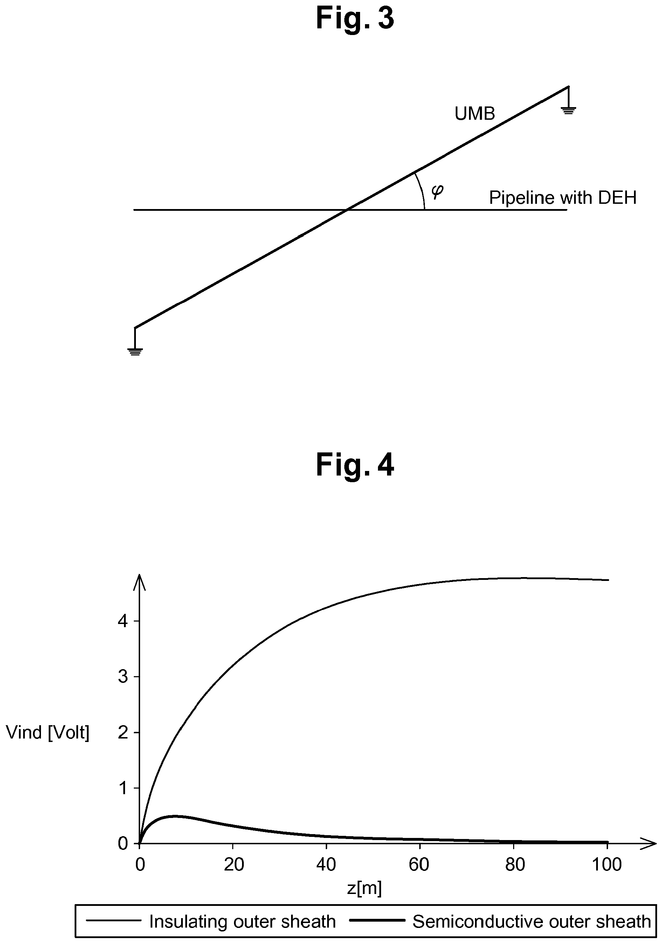

The invention will be further described with reference to the examples illustrated in Figs 3-6.

Fig 3 shows an example of crossing of a steel tube umbilical 10 and a pipeline 30 with DEH in seawater.

To exemplify the technical solution of the invention, the example in figure 3 illustrates a typical DEH pipeline system 30 that is crossing a typical steel tube umbilical 10 at a crossing angle of 45°, the results being presented in Fig. 4.

With a prior art umbilical having an insulating outer sheath, the voltage will reach a peak at about 100 m from the crossing (at z=0) with a value of nearly 5 Volt. On the other hand, with an umbilical 10 arranged according to a method according to the present invention with a semiconductive outer sheath 14, the voltage is less than 0.5 Volt, and AC corrosion will not occur.

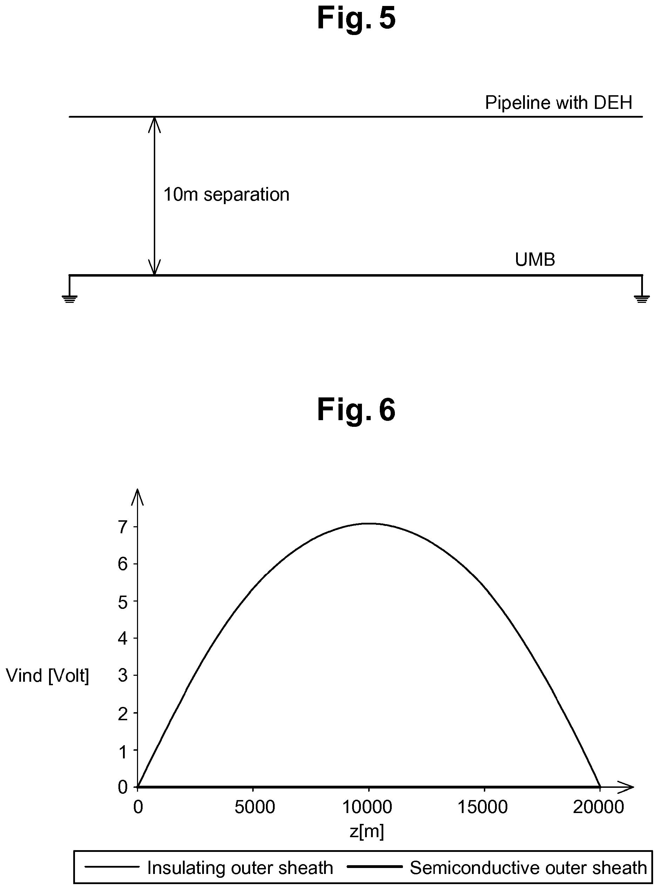

Fig 5 illustrates another example where a steel tube umbilical 10 is routed parallel to a pipeline 30 with DEH. This example assumes 20 km length, and 10 m separation, with otherwise typical values. With a prior art umbilical having an insulating outer sheath the induced voltage peaks at about 7 Volt (line A), and with an umbilical 10 arranged according to a method according to the present invention having a semiconductive outer sheath 14, the voltage is reduced to zero (line B).

The above examples are meant to be illustrative. The voltage reduction of the umbilical arranged according to the method of the present invention compared to that of a prior art umbilical will of course depend upon the layout and situation, but will typically be below 10% of the prior art value.

Semiconductive sheath 14 may be made of any appropriate semiconductive material that will tolerate a subsea environment. A preferable material is polyethylene (PE).

The volume resistivity of the semi-conductive polymeric sheath shall preferably not exceed 1000 Ωm, such resistivity being measured as per IEC 60840 and IEC 62067, "Method of measuring resistivity of semi-conducting screens".

## Claims

1. A method for arranging an umbilical (10) on the seafloor, comprising the steps of arranging an umbilical having a steel umbilical tube (12) about which is arranged a semiconductive outer sheath (14), and laying the umbilical on the seabed in the vicinity of a DEH pipeline whereby a portion of the umbilical is at a distance of 150m or less from the DEH pipeline.

2. The method according to claim 1, wherein a portion of the umbilical (10) is at a distance of 110m or less from the DEH pipeline.

3. The method according to claim 1, wherein a portion of the umbilical (10) is at a distance of 10m or less from the DEH pipeline.

4. The method according to claim 1, wherein the umbilical (10) crosses the DEH pipeline.

## Patentansprüche

1. Verfahren zum Anordnen eines Versorgungskabels (10) auf dem Meeresboden, die Schritte des Anordnens eines Versorgungskabels, das ein Versorgungskabel-Stahlrohr (12) aufweist, um das eine halbleitende äußere Hülle (14) angeordnet ist, und des Auslegens des Versorgungskabels auf dem Meeresgrund in der Nähe einer DEH-Leitung umfassend, wobei ein Abschnitt des Versorgungskabels in einer Entfernung von 150 m oder weniger von der DEH-Leitung liegt.

2. Verfahren nach Anspruch 1, wobei ein Abschnitt des Versorgungskabels (10) in einer Entfernung von 110 m oder weniger von der DEH-Leitung liegt.

3. Verfahren nach Anspruch 1, wobei ein Abschnitt des Versorgungskabels (10) in einer Entfernung von 10 m oder weniger von der DEH-Leitung liegt.

4. Verfahren nach Anspruch 1, wobei das Versorgungskabel (10) die DEH-Leitung kreuzt.

## Revendications

1. Procédé d'agencement d'un cordon ombilical (10) sur le plancher sous-marin, comprenant les étapes d'agencement d'un cordon ombilical présentant un tube ombilical en acier (12) autour duquel est agencée une gaine externe semi-conductrice (14), et de pose du cordon ombilical sur le fond marin au voisinage d'un pipeline à chauffage électrique direct (DEH) moyennant quoi une partie du cordon ombilical est à une distance de 150 m ou moins du pipeline à DEH.

2. Procédé selon la revendication 1, dans lequel une partie du cordon ombilical (10) est à une distance de 110 m ou moins du pipeline à DEH.

3. Procédé selon la revendication 1, dans lequel une partie du cordon ombilical (10) est à une distance de 10 m ou moins du pipeline à DEH.

4. Procédé selon la revendication 1, dans lequel le cordon ombilical (10) croise le pipeline à DEH.
